# EUROPÄISCHE PATENTSCHRIFT

(11) **EP 2 758 696 B1**
(45) Veröffentlichungstag und Bekanntmachung des Hinweises auf die Patenterteilung: **27.04.2016**
(21) Anmeldenummer: 12761577.1
(22) Anmeldetag: 12.09.2012
(51) Int. Cl.: F16K 31/06

(54) **WASSERFÜHRENDES HAUSHALTSGERÄT MIT EINEM DIE SCHWERKRAFT NUTZENDEN VENTILELEMENT**
WATER-USING HOUSEHOLD APPLIANCE COMPRISING A VALVE ELEMENT WHICH USES GRAVITY
APPAREIL MÉNAGER À CIRCULATION D'EAU ÉQUIPÉ D'UN ORGANE DE TYPE VANNE UTILISANT LA FORCE DE GRAVITÉ

(30) Priorität: 23.09.2011 DE 102011083294
(43) Veröffentlichungstag der Anmeldung: 30.07.2014
(73) Patentinhaber: BSH Hausgeräte GmbH, 81739 München (DE)
(72) Erfinder: EGLMEIER, Hans, 10587 Berlin (DE); HANAU, Andreas, 12359 Berlin (DE); PROPPE, Wolfgang, 13589 Berlin (DE)
(86) Internationale Anmeldenummer: PCT/EP2012/067766
(87) Internationale Veröffentlichungsnummer: WO 2013/041414

(56) Entgegenhaltungen:
- EP-A1- 1 046 369
- WO-A1-2011/018385
- DE-A1- 3 537 435
- DE-A1- 10 145 070
- FR-A1- 2 167 983
- GB-A- 2 033 059

## Beschreibung

Die Erfindung betrifft ein wasserführendes Haushaltsgerät, insbesondere ein Wäschebehandlungsgerät zum Waschen und/oder Trocknen von Wäsche. Speziell betrifft die Erfindung das Gebiet der Waschmaschinen und Waschtrockner.

Aus der WO 2011/018385 A1 ist ein wasserführendes Hausgerät mit einem Schaltventil bekannt. Das Schaltventil umfasst einen Ventilraum, in den ein mit einer Eingangsleitung verbundener Eingang mündet. Außerdem sind ein erster Ausgang mit einer ersten Ventilsitzfläche und ein zweiter Ausgang mit einer zweiten Ventilsitzfläche an dem Schaltventil vorgesehen. Eine magnetische Betätigungseinrichtung dient zum Betätigen eines Ventilschließkörpers des Schaltventils. Der Ventilschließkörper ist dabei in dem Ventilraum angeordnet und wirkt einerseits mit der ersten Ventilsitzfläche und andererseits mit der zweiten Ventilsitzfläche zu einem Dichtsitz zusammen. Die magnetische Betätigungseinrichtung weist Magnetspulen auf, wobei eine der Magnetspulen die erste Ventilsitzfläche umfänglich umschließt und die andere Magnetspule die zweite Ventilsitzfläche umfänglich umschließt. Ferner weist der Ventilraum eine Mulde auf, die im unbestromten Zustand der Magnetelemente zum Aufnehmen des Ventilschließkörpers dient, wobei die Dichtsitze an den Ventilsitzflächen dann geöffnet sind.

Das aus der WO 2011/018385 A1 bekannte wasserführende Hausgerät hat den Nachteil, dass zum Betätigen des einzigen Ventilschließkörpers des Schaltventils, der kugelförmig ausgestaltet ist, zwei Magnetspulen erforderlich sind, die von einer Steuerung entsprechend den drei möglichen Betriebsmodi angesteuert werden müssen. Im Unterschied zu einem mechanisch betätigten Ventilschließkörper, der von einem einzigen elektromagnetischen Aktor betätigt werden kann, ist somit eine weitere Magnetspule erforderlich. Außerdem besteht das Problem, dass in der mittleren Stellung des kugelförmigen Ventilschließkörpers Wirbel in der Strömung des zugeführten Wassers entstehen, das hierbei beidseitig über die beiden geöffneten Dichtsitze abfließt. Denn durch die Aufteilung der Strömung entstehen an beiden Seiten des kugelförmigen Ventilschließkörpers Wirbel, die sich abwechselnd lösen. Hierdurch wird der kugelförmige Ventilschließkörper leicht in Bewegung versetzt, wobei es anschaulich gesprochen zu einem Aufschaukeln der Bewegung kommt. Hierdurch kann der kugelförmige Ventilschließkörper zu weit aus der erforderlichen Mittelstellung bewegt werden, so dass die Mittelstellung nicht mehr stabil gehalten werden kann. Eine Lösung dieses Problems macht eine entsprechend tiefe Ausgestaltung der Mulde für die Mittelstellung erforderlich, was wiederum stärkere Magnetspulen erfordert. Dies erhöht die Kosten zur Herstellung des Schaltventils.

Die Offenlegungsschrift DE 35 37 435 A1 zeigt ein Drei/Zwei-Wege-Magnetventil. Die Offenlegungsschrift FR 2 167 983 A1 zeigt ein Ventil umfassend eine Leitung, die mittels einer ferromagnetischen Kugel verschlossen werden kann.

Die Offenlegungsschrift GB 2 033 059 zeigt ein Ventil umfassend eine Leitung, die mittels einer magnetischen Kugel verschlossen werden kann.

Die Offenlegungsschrift DE 101 45 070 A1 zeigt ein Miniatur-Ventil.

Die Offenlegungsschrift EP 1 046 369 A1 zeigt ein Zweiwegeventil für ein flüssigkeitsführendes Haushaltsgerät.

Aufgabe der Erfindung ist es, ein wasserführendes Haushaltsgerät zu schaffen, das einen verbesserten Aufbau aufweist. Speziell ist es eine Aufgabe der Erfindung, ein wasserführendes Haushaltsgerät anzugeben, bei dem ein zugeführter Frischwasserstrom gezielt in einen von zwei oder mehreren Wegen geleitet werden kann, wobei der Aufwand für diese Aufteilung in Bezug auf den jeweiligen Anwendungsfall optimiert ist.

Die Aufgabe wird durch ein wasserführendes Haushaltsgerät, nach Anspruch 1 gelöst.

Durch die in den Unteransprüchen aufgeführten Maßnahmen sind vorteilhafte Weiterbildungen des erfindungsgemäßen wasserführenden Haushaltsgeräts möglich. Wenn das wasserführende Haushaltsgerät zur Vorbereitung eines Betriebs beispielsweise in einem Privathaushalt aufgestellt wird und gegebenenfalls vorgesehene Transportsicherungen entfernt sind, dann befindet sich das wasserführende Haushaltsgerät in einer Betriebslage. In der Betriebslage sind die einzelnen Bauteile des wasserführenden Haushaltsgeräts dann geeignet ausgerichtet, was in der Regel funktionsrelevant ist. Beispielsweise kann in eine Einspülschale geführtes Frischwasser dann durch einen Verbindungskanal nach unten in einen Laugenbehälter laufen. Ferner befindet sich dann auch ein Ausgang des Laugenbehälters an seinem bezüglich der Schwerkraft tiefsten Punkt, so dass über den Ausgang des Laugenbehälters ein Abpumpen der Lauge möglich ist. Das erste Ventilelement des wasserführenden Haushaltsgeräts ist in Bezug auf diese vorgegebene Betriebslage ausgerichtet. Hierbei ist das erste Ventilelement so in dem wasserführenden Haushaltsgerät angeordnet, dass der Ventilschließkörper in der Betriebslage aufgrund der Schwerkraft an dem ersten Ausgang angeordnet ist. Wird nun Frischwasser über den Eingang in den Ventilraum geführt, dann verschließt der Ventilschließkörper den ersten Ausgang, während der zweite Ausgang offen ist und das Frischwasser somit über den zweiten Ausgang aus dem Ventilraum fließt. Andererseits kann der Ventilschließkörper von der magnetischen Betätigungseinrichtung betätigt werden. Wird anschließend Frischwasser über den Eingang in den Ventilraum geführt, dann verschließt der Ventilschließkörper den zweiten Ausgang, während nunmehr der erste Ausgang offen ist und somit das Frischwasser über den ersten Ausgang aus dem Ventilraum fließt. In beiden Fällen wird der Ventilschließkörper durch einen ausreichend starken Frischwasserstrom an den jeweiligen Ausgang gepresst, so dass dieser zuverlässig verschlossen ist. Speziell hält solch ein Frischwasserstrom aufgrund des erzeugten Wasserdrucks den Ventilschließkörper auch bei wieder abgeschalteter magnetischer Betätigungseinrichtung an dem zweiten Ausgang, so dass dieser verschlossen bleibt. Erst wenn der Frischwasserstrom endet oder wenn dieser nicht mehr ausreichend groß ist, dann wird der Ventilschließkörper aufgrund der Schwerkraft in beiden Fällen wieder an dem ersten Ausgang positioniert.

Vorteilhaft ist es, dass der Ventilschließkörper zwischen dem ersten Ausgang und dem zweiten Ausgang in dem Ventilraum geführt ist, dass der Eingang zwischen dem ersten Ausgang und dem zweiten Ausgang in den Ventilraum mündet, dass der Ventilschließkörper in der Einbaulage des Ventilelements aufgrund der Schwerkraft zwischen dem ersten Ausgang und dem Eingang angeordnet ist und dass der von der magnetischen Betätigungseinrichtung betätigte Ventilschließkörper zwischen dem Eingang und dem zweiten Ausgang angeordnet ist. Beim Zuführen von Frischwasser oder einer anderen Flüssigkeit über den Eingang in den Ventilraum des Ventilelements wird der Ventilschließkörper dann zuverlässig gegen den jeweiligen Ausgang beaufschlagt. Hierbei ist es auch möglich, dass der Ventilschließkörper erst durch den Wasserdruck direkt an den jeweiligen Ausgang verstellt und dann zum Abdichten gegen den Ausgang gepresst wird. Somit ist eine zuverlässige Betriebsweise ermöglicht, bei der gewisse Toleranzen vorgegeben sind und Fehlfunktionen vermieden werden. Speziell wird in beiden Stellungen des Ventilelements eine Selbststabilisierung durch den Wasserdruck ermöglicht. Hierbei kann mit ansteigendem Wasserdruck auch die Anpresskraft an dem jeweiligen Ausgang zunehmen, was wiederum die Dichtwirkung erhöht. Der Wasserstrom kann hierbei weitgehend ungedrosselt durch das Ventilelement geführt werden.

Der Ventilschließkörper ist vorzugsweise kugelförmig, er könnte jedoch auch von der Kugelform ein wenig abweichen, z.B. eiförmig oder ein Ellipsoid sein. Es wäre auch denkbar, den Ventilschließkörper walzenförmig (zylindrisch) zu gestalten. Es in jedem Fall von Vorteil, wenn sich der Ventilschließkörper in dem Ventilraum gut beweglich ist, vorzugsweise rollen kann, um sich an einen der Ausgänge zu bewegen. Der Durchmesser des Ventilschließkörpers sollte auf die Durchmesser der beiden Ausgänge (erster und zweiter Ausgang), welche sinnvollerweise denselben Durchmesser haben sollten, sinnvoll abgestimmt sein, d.h. einen größeren Durchmesser haben, damit er dichtend die Ausgänge verschließen kann. Um von der Betätigungseinrichtung bewegt werden zu können, ist es von Vorteil wenn der Ventilschließkörper zumindest teilweise entweder selbst magnetisch ist oder ein ferromagnetisches Material enthält oder aus einem solchen gebildet ist. Ein ferromagnetisches Material ist ein Material, das von einem Magneten angezogen werden kann. Dieses Material kann z.B. Eisenspäne (oder Eisenpulver oder Ferritpulver oder dergleichen dem Fachmann bekannte Materialien) enthalten, die zum Beispiel in dem Material des Ventilschließkörpers mit verarbeitet sind. Um eine verbesserte dichtende Wirkung zu erzielen, bietet es sich an, wenn der Ventilschließkörper aus einem weichelastischen Kunststoff gefertigt ist, beispielsweise Silikon, Vollgummi oder dergleichen. Ein derartiger Kunststoff kann durch bekannte Gussverfahren in die gewünschte Form gebracht werden, und ein ferromagnetisches Material kann mit eingegossen werden. Es sind aber auch metallische ferromagnetische Ventilschließkörper denkbar. Ferner ist es vorteilhaft, dass der Ventilschließkörper eine auf zumindest einem Kunststoff basierende Schale aufweist. Hierdurch kann die Masse des Ventilschließkörpers verringert werden, so dass sich die von der magnetischen Betätigungseinrichtung aufzubringende Verstellkraft verringert. Außerdem kann durch eine aus Kunststoff gebildete Schale die Dichtwirkung des Ventilschließkörpers an dem jeweiligen Ausgang verbessert werden. Ferner kann hierdurch ein möglicher Verschleiß am Dichtsitz zwischen dem Ventilschließkörper und dem jeweiligen Ausgang vermieden werden. Des Weiteren ist der Ventilschließkörper in vorteilhafter Weise als hohlkugelförmiger Ventilschließkörper ausgestaltet. Dies ermöglicht eine Verringerung der Masse des Ventilschließkörpers, so dass sich die von der magnetischen Betätigungseinrichtung aufzubringende Verstellkraft reduziert.

Vorteilhaft ist es auch, dass eine Steuerung und ein Sperrventil vorgesehen sind, dass das Sperrventil eine Zufuhr eines durch das erste Ventilelement führbaren Wasserstroms steuert und dass die Steuerung eine mögliche Ansteuerung der magnetischen Betätigungseinrichtung vor einer Ansteuerung des Sperrventils, bei der das Sperrventil geöffnet wird, ausführt. Beispielsweise kann ausgehend von einem geschlossenen Sperrventil von der Steuerung erkannt werden, welcher Ausgang zu wählen ist. Soll der Wasserstrom von dem Eingang des ersten Ventilelements zu dem zweiten Ausgang geführt werden, dann erfolgt keine Ansteuerung der magnetischen Betätigungseinrichtung, da der Ventilschließkörper bereits den richtigen Ausgang, nämlich den ersten Ausgang, verschließt. Somit kann das Sperrventil geöffnet werden. In einem Fall, in dem der Wasserstrom von dem Eingang durch den ersten Ausgang geführt werden soll, steuert die Steuerung die magnetische Betätigungseinrichtung zunächst an, so dass der Ventilschließkörper an den zweiten Ausgang verstellt wird. Erst dann, also nachfolgend zu der Ansteuerung der Betätigungseinrichtung, öffnet die Steuerung das Sperrventil. Wenn in Bezug auf den jeweiligen Anwendungsfall von einem ausreichenden Wasserdruck ausgegangen werden kann, dann kann nach dem Freigeben des Wasserstroms durch das erste Ventilelement die Betätigungseinrichtung wieder abgeschaltet werden. Somit ergibt sich eine zuverlässige Betriebsweise, bei der insbesondere die Belastung der magnetischen Betätigungseinrichtung gering ist. Somit verringert sich auch die Anforderung an die magnetische Betätigungseinrichtung, so dass diese kostengünstig ausgeführt werden kann.

Es ist zumindest ein zweites Ventilelement vorgesehen, wobei das zweite Ventilelement einen Ventilraum und einen in dem Ventilraum angeordneten Ventilschließkörper aufweist, dass dem Ventilraum des zweiten Ventilelements ein Eingang, ein erster Ausgang und ein zweiter Ausgang zugeordnet sind und dass der Ventilschließkörper des zweiten Ventilelements von einer weiteren magnetischen Betätigungseinrichtung betätigbar ist, dass das zweite Ventilelement so angeordnet ist, dass der Ventilschließkörper des weiteren Ventilelements in der Betriebslage aufgrund der Schwerkraft an dem ersten Ausgang des zweiten Ventilelements angeordnet ist, und dass die weitere magnetische Betätigungseinrichtung zum Betätigen des Ventilschließkörpers des zweiten Ventilelements entgegen der Schwerkraft von dem ersten Ausgang des weiteren Ventilelements zu dem zweiten Ausgang des weiteren Ventilelements dient.

Hierbei können die Ventilelemente in vorteilhafter Weise zu einer Ventilanordnung kombiniert werden. Hierdurch kann der zugeführte Wasserstrom auf mehr als zwei Zweige aufgeteilt werden, wobei die Anzahl der benötigten magnetischen Betätigungseinrichtungen optimiert ist. Speziell kann die Ventilanordnung den zugeführten Frischwasserstrom unter Nutzung von zwei magnetischen Betätigungseinrichtungen auf drei oder vier Zweige aufteilen. Neben einer geringen Anzahl an magnetischen Betätigungseinrichtungen ist hierbei auch der Steuerungsaufwand gering. Speziell sind neben der in der Regel ohnehin erforderlichen Ansteuerung des Sperrventils nur zwei Ausgänge der Steuerung zum Ansteuern der beiden magnetischen Betätigungseinrichtungen erforderlich.

Ferner ist das erste Ventilelement und das zweite Ventilelement hintereinander geschaltet, wobei einer der Ausgänge des Ventilelements zu dem Eingang des weiteren Ventilelements führt. Je nach Ausgestaltung der Ventilanordnung kann hierbei der Ausgang des Ventilelements mit dem Eingang des weiteren Ventilelements verbunden sein, beispielsweise über ein Leitungsstück. Möglich ist allerdings auch eine integrierte Ausgestaltung, bei der der Ausgang des ersten Ventilelements zugleich den Eingang des zweiten Ventilelements bildet (oder umgekehrt, je nach Anordnung, die Bezeichnungen "erstes" und "zweites" beziehen sich nicht auf eine feste Reihenfolge).

Diese Ventilanordnung kann auch mehr als zwei Ventilelemente aufweisen. Eine Ventilanordnung mit zwei Ventilelementen kann hierbei auf unterschiedliche Weise auf drei Ventilelemente erweitert werden, indem einer der verbleibenden freien Ausgänge der bisherigen Ventilelemente zu dem Eingang des hinzugekommenen Ventilelements führt. Diese Ventilanordnung mit drei Ventilelementen kann wiederum um ein weiteres Ventilelement erweitert werden. Dies kann entsprechend weiter fortgesetzt werden. Somit kann in Bezug auf den jeweiligen Anwendungsfall eine Ventilanordnung geschaffen werden, die den Wasserstrom von dem Eingang auf die gewünschte Anzahl an Zweigen aufteilt.

Andererseits ist es auch vorteilhaft, dass zumindest ein drittes Ventilelement vorgesehen ist, dass das dritte Ventilelement einen Ventilraum und einen in dem Ventilraum angeordneten Ventilschließkörper aufweist, dass dem Ventilraum des weiteren Ventilelements ein Eingang, ein erster Ausgang und ein zweiter Ausgang zugeordnet sind, dass der Eingang des Ventilelements durch den ersten Ausgang des dritten Ventilelements gebildet ist, dass der Eingang des weiteren Ventilelements durch den zweiten Ausgang des dritten Ventilelements gebildet ist, dass der Ventilschließkörper des dritten Ventilelements entweder von der magnetischen Betätigungseinrichtung oder von der weiteren magnetischen Betätigungseinrichtung betätigbar ist, wobei die magnetische Betätigungseinrichtung und die weitere magnetische Betätigungseinrichtung so angeordnet sind, dass bei aktivierter magnetische Betätigungseinrichtung und deaktivierter weiterer Betätigungseinrichtung der Ventilschließkörper des dritten Ventilelements an den ersten Ausgang des dritten Ventilelements verstellbar ist und bei deaktivierter magnetischer Betätigungseinrichtung und aktivierter weiterer Betätigungseinrichtung der Ventilschließkörper des dritten Ventilelements an den zweiten Ausgang des dritten Ventilelements verstellbar ist. Das dritte Ventilelement kann hierbei unabhängig von der Schwerkraft geschaltet werden, da die Schaltstellung durch die zeitliche Abfolge der Aktivierung der magnetischen Betätigungseinrichtung und der weiteren magnetischen Betätigungseinrichtung erfolgt. Die magnetische Betätigungseinrichtung kann somit auf den Ventilschließkörper des Ventilelements und den Ventilschließkörper des dritten Ventilelements einwirken. Die weitere magnetische Betätigungseinrichtung kann auf den Ventilschließkörper des weiteren Ventilelements und auf den Ventilschließkörper des dritten Ventilelements einwirken.

Bezüglich des Ventilschließkörpers des dritten Ventilelements macht sich diese Konstruktion zunutze, dass die Kraft zwischen der jeweiligen magnetischen Betätigungseinrichtung und dem anzuziehenden Ventilschließkörper sehr stark mit dem Abstand abnimmt. Wird der Ventilschließkörper des dritten Ventilelements von einer der magnetischen Betätigungseinrichtungen festgehalten, dann wird er bei einer später beginnenden Bestromung der anderen Betätigungseinrichtung von dieser nicht mehr zurückgestellt. Durch eine zeitliche Folge der Aktivierung der magnetischen Betätigungseinrichtungen bzw. durch ein gezieltes Bestromen einer der magnetischen Betätigungseinrichtungen kann somit eine Auswahl zwischen den vier Wegen beziehungsweise den vier verbleibenden Ausgängen getroffen werden. Auch in diesem Fall kann eine Erweiterung durch weitere nachgeordnete Ventilelemente erfolgen.

Vorteilhaft ist es allerdings, dass das erste Ventilelement, das zweite Ventilelement und das dritte Ventilelement eine Ventileinheit bilden und dass die Ausgänge des ersten Ventilelements und die Ausgänge des zweiten Ventilelements die Ausgänge der Ventileinheit bilden. Somit kann die Ventileinheit als Ventileinheit mit vier Wegen ausgestaltet werden, wobei sich ein kompakter Aufbau ergibt und eine reduzierte Anzahl an Bauteilen erforderlich ist. Denn die drei bewegbaren Ventilschließkörper können bei dieser Ausgestaltung durch zwei magnetische Betätigungseinrichtungen betätigt werden.

Ein vorteilhafter Einsatz besteht hierbei zum Einspülen von vorzugsweise flüssigen Komponenten, wobei auch zusätzliche Komponenten, beispielsweise ein Enthärter, eingespült werden können. Im Zusammenhang mit Umpumpsystemen kann eine gute Vermischung des Waschmittels erzielt werden, wobei zusätzliche Einspülkanäle, etwa Sprühdüsen, versorgt werden können.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
- Fig. 1: ein erstes Ventilelement mit einer magnetischen Betätigungseinrichtung eines wasserführenden Haushaltsgeräts in einer schematischen Schnittdarstellung;
- Fig. 2: ein wasserführendes Haushaltsgerät in einer auszugsweisen, schematischen Schnittdarstellung entsprechend einem Ausführungsbeispiel der Erfindung und
- Fig. 3: eine Ventileinheit eines wasserführenden Haushaltsgeräts in einer schematischen Schnittdarstellung entsprechend einem weiteren Ausführungsbeispiel der Erfindung.

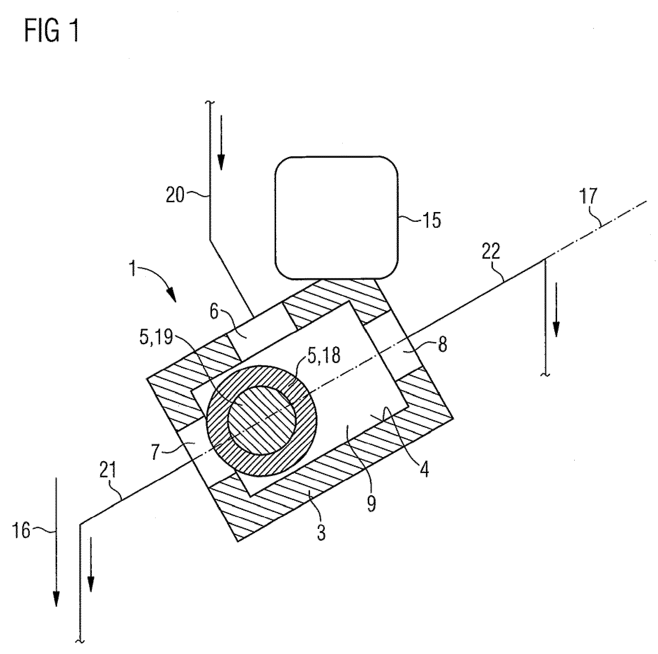

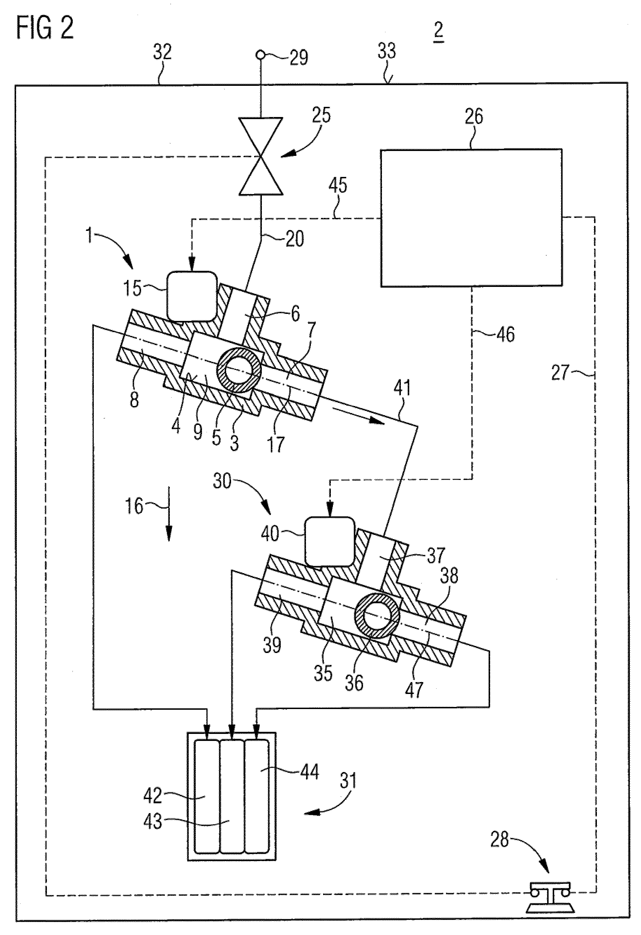

Fig. 1 zeigt beispielhaft ein erstes Ventilelement 1 eines wasserführenden Haushaltsgeräts 2 (Fig. 2) in einer schematischen Schnittdarstellung. Das wasserführende Haushaltsgerät 2 mit dem Ventilelement 1 kann insbesondere als Wäschebehandlungsgerät ausgestaltet sein und zum Waschen und/oder Trocknen von Wäsche dienen. Speziell kann das wasserführende Haushaltsgerät 2 als Waschmaschine oder Waschtrockner ausgestaltet sein. Das wasserführende Haushaltsgerät 2 der Erfindung eignet sich allerdings auch für andere Anwendungsfälle, insbesondere kann es als Geschirrspüler ausgestaltet sein.

Das erste Ventilelement 1 weist ein Gehäuse 3 auf, in dem eine zylindermantelförmige Innenwand 4 ausgestaltet ist. Die zylindermantelförmige Innenwand 4 dient als Führung für einen kugelförmigen Ventilschließkörper 5. Das erste Ventilelement 1 ist hierdurch als Kugelventil ausgestaltet.

In dem Gehäuse 3 sind ein Eingang 6, ein erster Ausgang 7 und ein zweiter Ausgang 8 ausgestaltet. Der Eingang 6, der erste Ausgang 7 und der zweite Ausgang 8 des ersten Ventilelements 1 sind hierbei einem im Inneren des Gehäuses 3 ausgestalteten Ventilraum 9 zugeordnet. Der Ventilraum 9 ist von der zylindermantelförmigen Innenwand 4 begrenzt.

Dem ersten Ventilelement 1 ist eine magnetische Betätigungseinrichtung 15 zugeordnet. Hierbei ist in diesem Ausführungsbeispiel für das erste Ventilelement 1 genau eine magnetische Betätigungseinrichtung 15 vorgesehen. Die magnetische Betätigungseinrichtung 15 ist an dem ersten Ventilelement 1 angeordnet.

Eine Schwerkraft 16 beziehungsweise eine Richtung 16 der Schwerkraft ist in der Fig. 1 durch einen Pfeil veranschaulicht. Das erste Ventilelement 1 ist so in dem wasserführenden Haushaltsgerät 2 angeordnet, dass eine Achse 17 des ersten Ventilelements 1 nicht horizontal, sondern schräg orientiert ist. Die Achse 17 verläuft hierbei mittig durch den Ventilraum 9, wobei die zylindermantelförmige Innenwand 4 bezüglich der Achse 17 rotationssymmetrisch ausgestaltet ist. Hierdurch ist das erste Ventilelement 1 so in dem wasserführenden Haushaltsgerät 2 angeordnet, dass der Ventilschließkörper 5 in einer Betriebslage aufgrund der Schwerkraft 16 an dem ersten Ausgang 7 angeordnet ist.

Der kugelförmige Ventilschließkörper 5 ist in dem Ventilraum 9 durch die zylinderförmige Innenwand 4 entlang der Achse 17 geführt. Wenn die magnetische Betätigungseinrichtung 15 aktiviert ist, dann wird eine anziehende Magnetkraft auf den Ventilschließkörper 5 ausgeübt. Der Ventilschließkörper 5 ist hierfür aus einem magnetischen Werkstoff gebildet. Bei solch einem Werkstoff kann es sich um einen magnetisierbaren Werkstoff, beispielsweise einen ferromagnetischen Werkstoff, oder einen permanentmagnetisierten Werkstoff handeln. Es ist auch die Kombination mehrerer Werkstoffe möglich. Außerdem kann der Ventilschließkörper 5 auch teilweise aus einem nichtmagnetischen Werkstoff, insbesondere einem Kunststoff gebildet sein. Speziell kann der kugelförmige Ventilschließkörper 5 eine Schale 18 aufweisen, die einen Kern 19 umgibt. Die Schale 18 kann hierbei aus einem Kunststoff gebildet sein, während der Kern 19 des Ventilschließkörpers 5 aus einem magnetischen Werkstoff gebildet ist, wie es in der Fig. 1 veranschaulicht ist.

Somit ist das erste Ventilelement 1 so angeordnet, dass der Ventilschließkörper 5 in der Betriebslage aufgrund der Schwerkraft 16 an dem ersten Ausgang 7 angeordnet ist, und dass die magnetische Betätigungseinrichtung 15 zum Betätigen des Ventilschließkörpers 5 entgegen der Schwerkraft 16 von dem ersten Ausgang 7 zu dem zweiten Ausgang 8 dient. Hierbei ist der Ventilschließkörper 5 zwischen dem ersten Ausgang 7 und dem zweiten Ausgang 8 in dem Ventilraum 9 geführt, wobei der Eingang 6 zwischen dem ersten Ausgang 7 und dem zweiten Ausgang 8 in den Ventilraum 9 mündet. In der Einbaulage des ersten Ventilelements 1 ist der Ventilschließkörper 5 aufgrund der Schwerkraft 16 zwischen dem ersten Ausgang 7 und dem Eingang 6 angeordnet, wenn die magnetische Betätigungseinrichtung 15 nicht bestromt wird. Bei einer Bestromung der magnetischen Betätigungseinrichtung 15 wird der Ventilschließkörper 5 entgegen der Schwerkraft 16 angezogen, so dass der von der magnetischen Betätigungseinrichtung 15 betätigte Ventilschließkörper 5 zwischen dem Eingang 6 und dem zweiten Ausgang 8 angeordnet ist. Daher kann durch die schräg stehende Achse 17 des Ventilelements 1 der Ventilschließkörper 5 mit nur einer magnetischen Betätigungseinrichtung 15 betätigt werden, um eine Verbindung des Eingangs 16 mit entweder dem ersten Ausgang 7 oder dem zweiten Ausgang 8 zu erzielen. Über eine Leitung 20, die zu dem Eingang 6 führt, zugeführtes Frischwasser kann hierdurch wahlweise in eine Leitung 21, die mit dem ersten Ausgang 7 verbunden ist, oder eine Leitung 22, die mit dem zweiten Ausgang 8 verbunden ist, geführt werden.

In diesem Ausführungsbeispiel bildet die zylindermantelförmige Innenwand 4 eine schräg stehende Kugellauffläche 4. Nach dem Stromlosschalten der magnetischen Betätigungseinrichtung 15 rollt der Ventilschließkörper 5 hierdurch wieder an den ersten Ausgang 7. Somit ist in der Ausgangsstellung stets der zweite Ausgang 8 gewählt. Der Wasserweg aus der Leitung 20 über den Eingang 6 in die Leitung 22 über den zweiten Ausgang 8 kann somit ohne zusätzlichen Steuerungsaufwand genutzt werden. Dieser Weg stellt deshalb vorzugsweise den Hauptwasserweg dar. Hierdurch kann beispielsweise eine zugehörige Einspülkammer automatisch, beispielsweise beim Öffnen eines Aquastoppventils 25 (Fig. 2), mit Wasser versorgt werden. Der Energieverbrauch des Ventilelements 1, eine Abwärme, eine Geräuschbildung und die Lebensdauer der Komponenten werden hierbei auch verbessert. Der Steuerungsaufwand wird ebenfalls minimiert.

Ein wesentlicher Kostenfaktor bei der Herstellung von magnetischen Ventilen ist der Kupferanteil in den Spulen von magnetischen Betätigungseinrichtungen 15. Bei herkömmlichen Ventilen sind solche Spulen in der Regel während der gesamten Zulaufdauer bestromt, so dass hierbei kontinuierlich Abwärme entsteht. Diese Abwärme muss in einem Maß abgeführt werden, dass das Innere der Spulen unter einer Grenztemperatur bleibt und somit ein Schaden für die Wicklung verhindert wird. Bei der Ausgestaltung des ersten Ventilelements 1 des Ausführungsbeispiels muss die magnetische Betätigungseinrichtung 15 hingegen nur für die Zeitdauer bestromt werden, die das Aquastoppventil 25 zum Öffnen und die das Wasser auf dem Weg durch die Leitung 20 zum ersten ersten Ventilelement 1 benötigt. Danach ist die Ventilstellung durch den Wasserdruck stabilisiert und die magnetische Betätigungseinrichtung 15 kann wieder stromlos geschaltet werden. Hierdurch kann sich die Bestromung der magnetischen Betätigungseinrichtung 15 beispielsweise auf eine Zeit von zwei Sekunden reduzieren. Entsprechend gering fällt die in dieser Zeit kumulierte Abwärme aus, so dass die Kupfermenge in den Spulen erheblich reduziert werden kann. Außerdem sinkt hierdurch auch der Energieverbrauch.

Fig. 2 zeigt ein wasserführendes Haushaltsgerät 2 in einer auszugsweisen, schematischen Darstellung entsprechend einem Ausführungsbeispiel der Erfindung. Das wasserführende Haushaltsgerät 2 weist ein Sperrventil 25 auf, das in diesem Ausführungsbeispiel als Aquastoppventil 25 ausgeführt ist. Außerdem weist das wasserführende Haushaltsgerät 2 eine Steuerung 26 auf, die über eine Steuerleitung 27 mit dem Aquastoppventil 25 verbunden ist. Hierbei befindet sich in der Steuerleitung 27 ein Schwimmerschalter 28, der die Funktionalität des Aquastopps ermöglicht.

Das wasserführende Haushaltsgerät 2 weist außerdem einen Anschluss 29 auf, der über die Leitung 20 mit dem Eingang 6 des ersten Ventilelements 1 verbunden ist. Hierbei ist in der Leitung 20 das Sperrventil 25 angeordnet. Somit kann die Steuerung 26 durch Betätigen des Sperrventils 25 den Wasserzufluss zu dem ersten Ventilelement 1 entsprechend einem Programmablauf steuern.

Außerdem ist in diesem Ausführungsbeispiel ein zweites Ventilelement 30 vorgesehen. Das zweite Ventilelement 30 ist hierbei bezüglich der Strömungsrichtung des zugeführten Frischwassers dem ersten Ventilelement 1 nachgeordnet. Das zweite Ventilelement 30 ist in diesem Ausführungsbeispiel entsprechend dem ersten Ventilelement 1 ausgestaltet. Ferner weist das wasserführende Haushaltsgerät 2 eine Einspülschale 31 auf. Das erste Ventilelement 1, das weitere Ventilelemente 30, die Steuerung 26, die Einspülschale 31, der Schwimmerschalter 28 und weitere nicht dargestellte Komponenten des wasserführenden Haushaltsgeräts 2 sind in einem Gehäuse 32 des wasserführenden Haushaltsgeräts 2 untergebracht. Hierbei sind die Ventilelemente 1, 30 auf geeignete Weise in dem Gehäuse 32 befestigt. Durch die Befestigung wird hierbei die Ausrichtung des ersten Ventilelements 1 bezüglich der Schwerkraft 16 vorgegeben, so dass in der Betriebslage die Achse 17 des ersten Ventilelements 1 schräg ausgerichtet ist. In der Betriebslage ist eine Oberseite 33 des wasserführenden Haushaltsgeräts 2, die durch eine Deckplatte gebildet sein kann, in der Regel horizontal ausgerichtet. Die Schwerkraft 16 beziehungsweise die Richtung 16 ist dann senkrecht zu der Oberseite 33.

Das zweite Ventilelement 30 weist einen Ventilraum 35 und einen in dem Ventilraum 35 angeordneten Ventilschließkörper 36 auf. Dem Ventilraum 35 des weiteren Ventilelements 30 sind ein Eingang 37, ein erster Ausgang 38 und ein zweiter Ausgang 39 zugeordnet. Außerdem ist eine weitere magnetische Betätigungseinrichtung 40 vorgesehen. In diesem Ausführungsbeispiel ist die magnetische Betätigungseinrichtung 15 nur dem ersten Ventilelement 1 zugeordnet. Die weitere magnetische Betätigungseinrichtung 40 ist nur dem weiteren Ventilelement 30 zugeordnet. Somit ist der Ventilschließkörper 5 des ersten Ventilelements 1 von der magnetischen Betätigungseinrichtung 15 betätigbar. Und der Ventilschließkörper 36 des zweiten Ventilelements 30 ist von der weiteren magnetischen Betätigungseinrichtung 40 betätigbar. Das zweite Ventilelement 30 ist so in dem Gehäuse 32 angeordnet, dass der Ventilschließkörper 36 des zweiteb Ventilelements 30 in der Betriebslage aufgrund der Schwerkraft 16 an dem ersten Ausgang 38 des zweiten Ventilelements 30 angeordnet ist. Die weitere magnetische Betätigungseinrichtung 40 dient zum Betätigen des Ventilschließkörpers 36 entgegen der Schwerkraft 16 von dem ersten Ausgang 38 zu dem zweiten Ausgang 39.

In diesem Ausführungsbeispiel sind die Ventilschließkörper 5, 36 als hohlkugelförmige Ventilschließkörper 5, 36 ausgestaltet. Hierdurch verringert sich die Masse der Ventilschließkörper 5, 36, so dass die von den magnetischen Betätigungseinrichtungen 15, 40 aufzubringenden magnetischen Verstellkräfte reduziert sind.

In diesem Ausführungsbeispiel sind die Ventilelemente 1, 30 so hintereinandergeschaltet, dass der erste Ausgang 7 des ersten Ventilelements 1 über eine Verbindungsleitung 41 zu dem Eingang 37 des zweiten Ventilelements 30 führt. Eine separate Verbindungsleitung 41 kann hierbei gegebenenfalls auch entfallen. Bei dieser Anordnung strömt das Frischwasser bei unbestromten magnetischen Betätigungseinrichtungen 15, 40 somit nur durch das Ventilelement 1, da das zweite Ventilelement 30 an dem in der Ausgangsstellung verschlossenen ersten Ausgang 7 des Ventilelements 1 angeschlossen ist. Das Frischwasser wird dann in eine erste Kammer 42 der Einspülschale 31 geführt. Diese erste Kammer 42 ist vorzugsweise als Hauptkammer der Einspülschale 31 ausgeführt, die am häufigsten durchspült wird. Hierdurch verringert sich der Steuerungsaufwand.

Erst bei einer Betätigung des Ventilschließkörpers 5 durch die magnetische Betätigungseinrichtung 15 wird der erste Ausgang 7 angewählt, so dass das Frischwasser dem zweiten Ventilelement 30 zugeführt wird. Bei unbestromter magnetischer Betätigungseinrichtung 40 ergibt sich in der Ausgangsstellung des zweiten Ventilelements 30 somit eine Durchleitung des Frischwassers zu dem zweiten Ausgang 39 des zweiten Ventilelements 30. Daher wird das Frischwasser in eine zweite Kammer 43 der Einspülschale 31 geführt. Die zweite Kammer 43 ist hierbei vorzugsweise die am zweithäufigsten verwendete Kammer der Einspülschale 31.

Wenn sowohl der Ventilschließkörper 5 durch die magnetische Betätigungseinrichtung 15 als auch der Ventilschließkörper 36 durch die weitere magnetische Betätigungseinrichtung 40 betätigt werden, dann gelangt das zugeführte Frischwasser über den ersten Ausgang 38 des zweiten Ventilelements 30 in eine dritte Kammer 44 der Einspülschale 31. In diesem Ausführungsbeispiel, in dem drei Kammern 42, 43, 44 in der Einspülschale 31 vorgesehen sind, handelt es sich bei der dritten Kammer 44 vorzugsweise um die am seltensten benutzte Kammer.

Die Steuerung 26 entscheidet zunächst, welche der Betätigungseinrichtungen 50, 40 in Bezug auf die vorgegebene Kammer 42, 43, 44 der Einspülschale 31 zu bestromen sind und steuert die zu bestromenden Betätigungseinrichtungen 15, 40 dann über Signalleitungen 45, 46 an. Anschließend steuert die Steuerung 26 das Sperrventil 25 an. Kurze Zeit nach dem Öffnen des Sperrventils 25 wird der Ventilschließkörper 5 und gegebenenfalls auch der Ventilschließkörper 36 durch den Wasserdruck des zugeführten Frischwassers in seiner Position gehalten. Eine eventuelle Bestromung der Betätigungseinrichtungen 15, 40 kann dann beendet werden. Somit ist der Energieverbrauch reduziert. Dies hat in Bezug auf die Belastung der Betätigungseinrichtungen 50, 40 wesentliche Vorteile, da die entstehende Verlustwärme hierdurch ebenfalls erheblich reduziert ist und somit die Bauteilbeanspruchung gering ist.

Der Teil der Leitung 20 zwischen dem Sperrventil 25 und dem ersten Ventilelement 1 ist bis auf den Staudruck im Betrieb zu jedem Zeitpunkt drucklos. Somit kann eine kostengünstige Ausgestaltung erfolgen. Speziell kann auf eine Gewebearmierung verzichtet werden. Hierbei ist auch eine leichte und flexible Ausführung möglich, was auch die Montage vereinfacht. Ein Risiko des Platzens der Leitung 20 wird hierdurch praktisch ausgeschlossen, da auch bei Nichtbenutzung die Anordnung stromabwärts des Sperrventils 25 nicht mit noch unter Druck stehendem Wasser gefüllt ist. Die Drucklosigkeit wird hierbei über den geöffneten zweiten Ausgang 8 des Ventilelements 1 und den geöffneten zweiten Ausgang 39 des weiteren Ventilelements 30 gewährleistet.

Ein weiterer Vorteil des wasserführenden Haushaltsgeräts 2 ist, dass zumindest im Wesentlichen der volle Leitungsdruck am Anschluss 29 zum Ausspülen des Waschmittels aus den Kammern 42 bis 44 der Einspülschale 31 zur Verfügung steht. Denn es entsteht insbesondere kein Druckverlust durch einen Mischer, der zum Verteilen des über zwei Zulaufkanäle zugeführten Frischwassers auf drei Einspülkanäle eingesetzt werden kann. Ferner kann die Leitung 20 vom Steuerventil 25 ohne Umwege direkt zu dem ersten Ventilelement 1 führen und dort montiert sein. Zusätzliche Verbindungsschläuche und diesbezügliche Schellen können somit eingespart werden und folglich vereinfacht sich auch die Montage.

Bei dem anhand der Fig. 2 beschriebenen Ausführungsbeispiel sind die Achse 17 des ersten Ventilelements 1 und eine Achse 47 des zweiten Ventilelements 30 schräg zu der Schwerkraft 16 orientiert. Die Achse 17 des ersten Ventilelements 1 und die Achse 47 des zweiten Ventilelements 30 können hierbei parallel zueinander orientiert sein.

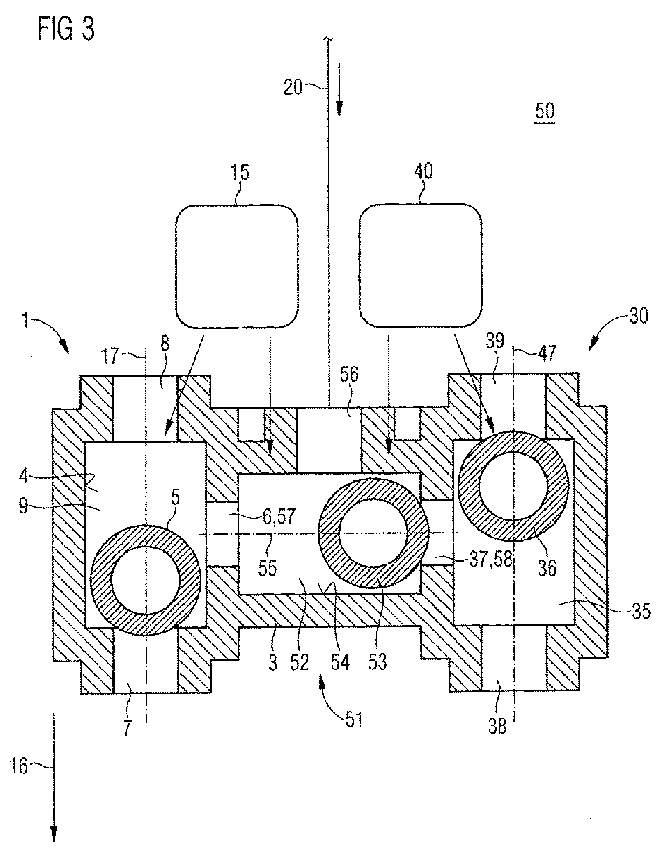

Fig. 3 zeigt eine Ventileinheit 50 eines wasserführenden Haushaltsgeräts 2 in einer auszugsweisen, schematischen Schnittdarstellung entsprechend einem weiteren Ausführungsbeispiel der Erfindung. Die Ventileinheit 50 weist ein erstes Ventileiement 1, ein zweites Ventilelement 30 und ein drittes Ventilelement 51 auf. Hierbei sind die Ventilelemente 1, 30, 51 in ein gemeinsames Gehäuse 3 integriert. Es ist allerdings auch eine mehrteilige Ausgestaltung mit mehreren Gehäuseteilen möglich. Das dritte Ventilelement 51 umfasst einen Ventilraum 52 und einen in dem Ventilraum angeordneten Ventilschließkörper 53. Der Ventilraum 52 ist hierbei von einer zylindermantelförmigen Innenwand 54 begrenzt. Durch die zylindermantelförmige Innenwand 54 ist eine Achse 55 definiert, die sich mittig durch den Ventilraum 52 erstreckt. Die Achse 55 des Ventilraums 52 ist hierbei horizontal, also senkrecht zu der Schwerkraft 16 orientiert. Die Achse 17 des ersten Ventilelements 1 sowie eine Achse 47 des zweiten Ventilelements 30 sind in diesem Ausführungsbeispiel in Richtung der Schwerkraft 16 orientiert.

In dem anhand der Fig. 3 beschriebenen Ausführungsbeispiel führt die Leitung 20 in das dritte Ventilelement 51. Hierfür ist die Leitung 20 mit einem Eingang 56 des dritten Ventilelements 51 verbunden. Ferner weist das dritte Ventilelement 51 einen ersten Ausgang 57 und einen zweiten Ausgang 58 auf.

Dem Ventilraum 52 des dritten Ventilelements 51 sind somit der Eingang 56, der erste Ausgang 57 und der zweite Ausgang 58 zugeordnet. Ferner ist der Eingang 6 des ersten Ventilelements 1 in diesem Ausführungsbeispiel durch den ersten Ausgang 57 des dritten Ventilelements 51 gebildet. Außerdem ist der Eingang 37 des zweiten Ventilelements 30 durch den zweiten Ausgang 58 des dritten Ventilelements 51 gebildet. Der Ventilraum 9, in dem der Ventilschließkörper 5 angeordnet ist, ist daher vergleichsweise nahe an dem ersten Ausgang 57 des dritten Ventilelements 51 angeordnet. Hingegen ist der Ventilraum 35 des weiteren Ventilelements 30 vergleichsweise nahe an dem zweiten Ausgang 58 des dritten Ventilelements 51 angeordnet.

Die magnetische Betätigungseinrichtung 15 ist in diesem Ausführungsbeispiel vergleichsweise nahe an dem ersten Ausgang 57 des dritten Ventilelements 51 angeordnet, während die weitere magnetische Betätigungseinrichtung 40 vergleichsweise nahe an dem zweiten Ausgang des dritten Ventilelements 51 angeordnet ist. Zugleich ist die magnetische Betätigungseinrichtung 15 näher an dem zweiten Ausgang 8 als an dem ersten Ausgang 7 des ersten Ventilelements 1 angeordnet. Entsprechend ist die weitere magnetische Betätigungseinrichtung 40 zugleich näher an dem zweiten Ausgang 39 als an dem ersten Ausgang 38 des weiteren Ventilelements 30 angeordnet.

Wenn die beiden magnetischen Betätigungseinrichtungen 15, 40 zunächst unbestromt sind, dann kann durch Anschalten einer der Betätigungseinrichtungen 15, 40 der Ventilschließkörper 53 entweder an dem ersten Ausgang 57 oder an dem zweiten Ausgang 58 des dritten Ventilelements 51 verstellt werden. Hierdurch wird entweder der erste Ausgang 57 oder der zweite Ausgang 58 verschlossen, so dass der jeweils andere Ausgang 57, 58 freigegeben ist. Beispielsweise kann zunächst die weitere magnetische Betätigungseinrichtung 40 aktiviert werden. Der Ventilschließkörper 53 wird hierdurch an den zweiten Ausgang 58 verstellt, wie es in der Fig. 3 dargestellt ist. Hierbei übt die weitere magnetische Betätigungseinrichtung 40 auch eine Kraft auf den Ventilschließkörper 36 aus, was allerdings in diesem Fall keine Rolle spielt. Denn bei verschlossenem zweiten Ausgang 58 des dritten Ventilelements 51 ist zugleich der Eingang 37 des weiteren Ventilelements 30 verschlossen, so dass ohnehin kein Wasser in den Ventilraum 35 gelangt.

Hingegen ist der erste Ausgang 57 des dritten Ventilelements 51 nun geöffnet, so dass Wasser über den Eingang 6 des ersten Ventilelements 1 in den Ventilraum 9 gelangen kann, wenn die Steuerung 26 das Sperrventil 25 öffnet. Vorher wird allerdings der erste Ausgang 7 oder der zweite Ausgang 8 des ersten Ventilelements 1 gewählt. Falls der zweite Ausgang 8 gewählt wird, dann verbleibt die magnetische Betätigungseinrichtung 15 inaktiv und das Sperrventil 25 wird geöffnet. Dies ist in der in der Fig. 3 gezeigten Stellung der Ventilschließkörper 5, 53 realisiert.

Soll hingegen der erste Ausgang 7 gewählt werden, dann wird nach der Aktivierung der weiteren magnetischen Betätigungseinrichtung 40 nun auch die magnetische Betätigungseinrichtung 15 aktiviert. Beim Aktivieren der magnetischen Betätigungseinrichtung 15 bleibt die weitere magnetische Betätigungseinrichtung 40 hierbei ebenfalls aktiviert. Da die Magnetkraft mit dem Abstand zur jeweiligen Betätigungseinrichtung 15, 40 abnimmt, überwiegt die Kraft der magnetischen Betätigungseinrichtung 40 bezüglich des Ventilschließkörpers 53 eine ebenfalls anziehende Kraft der magnetischen Betätigungseinrichtung 15. Der Ventilschließkörper 53 verbleibt deshalb an dem zweiten Ausgang 58. Durch die aktivierte magnetische Betätigungseinrichtung 15 wird allerdings der Ventilschließkörper 5 betätigt, so dass in diesem Fall der zweite Ausgang 8 verschlossen wird. Wird nun das Sperrventil 25 geöffnet, dann fließt das Wasser aus der Leitung 20 durch den Ventilraum 52 und den Ventilraum 9 zu dem ersten Ausgang 7 des ersten Ventilelements 1. Da der Wasserdruck die Ventilelemente 5, 53 in ihrer jeweiligen Position fixiert, können die Betätigungseinrichtungen 15, 40 nun deaktiviert werden. Hierbei spielt es wiederum keine Rolle, dass der Ventilschließkörper 36 nach der Deaktivierung nun den ersten Ausgang 38 des zweiten Ventilelements 30 verschließt.

Entsprechend kann einer der Ausgänge 38, 39 des zweiten Ventilelements 30 angewählt werden, wenn vor dem Öffnen des Sperrventils 25 zuallererst die magnetische Betätigungseinrichtung 15 aktiviert wird.

In diesem Ausführungsbeispiel ergibt sich eine kompakte Ausgestaltung der Ventileinheit 50. Hierbei bilden die Ausgänge 7, 8 des Ventilelements 1 und die Ausgänge 38, 39 des weiteren Ventilelements 30 die Ausgänge 7, 8, 38, 39 der Ventileinheit 50. Hierbei kann mit nur zwei magnetischen Betätigungseinrichtungen 50, 40, die auf lediglich drei Ventilschließkörper 5, 36, 53 einwirken, eine Ventileinheit 50 mit vier Ausgängen 7, 8, 38, 39 realisiert werden. Bei dem anhand der Fig. 3 beschriebenen Ausführungsbeispiel ist es auch möglich, dass eine der Achsen 17, 47 der Ventilelemente 1, 30 oder beide Achsen 17, 47 der Ventilelemente 1, 30 schräg zu der Schwerkraft 16 orientiert sind.

Die zum Schalten der Ventilelemente 1, 30 erforderliche Magnetkraft kann durch eine hohlkugelförmige Ausgestaltung der Ventilschließkörper 5, 36 reduziert werden. Um einen Aufbau aus Gleichteilen zu ermöglichen, ist vorzugsweise auch der Ventilschließkörper 53 so wie die Ventilschließkörper 5, 36 ausgeführt. Eine Verringerung der erforderlichen Magnetkraft durch Verringerung der Masse der Ventilschließkörper 5, 36 kann auch durch Herstellen aus ferromagnetisch gefüllten Kunststoffen oder einem Ferritgummi, durch eine Ausgestaltung in Form von Hohlkugeln aus ferromagnetischem Material, aus ferromagnetisch beschichteten Kugeln oder dergleichen erzielt werden. Die Ventilschließkörper 5, 36, 53 können allerdings auch von einer Kugelform abweichend ausgestaltet sein.

Somit ist eine einfache Ausführung zur gezielten Versorgung von zwei oder mehr, insbesondere drei Wasserwegen, möglich. Durch ein erstes Ventilelement 1, das die Wahl zwischen zwei Wegen ermöglicht, kann in vorteilhafter Weise auch ein wasserführendes Haushaltsgerät 2 mit einem automatischen Dosiersystem realisiert werden. Hierbei kann einer der Wege zu dem automatischen Dosiersystem führen.

### Bezugszeichenliste

- 1: erstes Ventilelement
- 2: wasserführendes Haushaltsgerät
- 3: Gehäuse
- 4: zylindermantelförmige Innenwand
- 5: kugelförmiger Ventilschließkörper
- 6: Eingang
- 7: erster Ausgang
- 8: zweiter Ausgang
- 9: Ventilraum
- 15: magnetische Betätigungseinrichtung
- 16: Schwerkraft (Richtung)
- 17: Achse
- 18: Schale
- 19: Kern
- 20-22: Leitung
- 25: Aquastoppventil (Sperrventil)
- 26: Steuerung
- 27: Steuerleitung
- 28: Schwimmerschalter
- 29: Anschluss
- 30: zweites Ventilelement
- 31: Einspülschale
- 32: Gehäuse
- 33: Oberseite
- 35: Ventilraum
- 36: Ventilschließkörper
- 37: Eingang
- 38: erster Ausgang
- 39: zweiter Ausgang
- 40: weitere magnetische Betätigungseinrichtung
- 41: Verbindungsleitung
- 42: erste Kammer
- 43: zweite Kammer
- 44: dritte Kammer
- 45,46: Signalleitung
- 47: Achse
- 50: Ventileinheit
- 51: drittes Ventilelement
- 52: Ventilraum
- 53: Ventilschließkörper
- 54: Innenwand
- 55: Achse
- 56: Eingang
- 57: erster Ausgang
- 58: zweiter Ausgang

## Patentansprüche

1. Wasserführendes Haushaltsgerät (2), insbesondere Wäschebehandlungsgerät zum Waschen und/oder Trocknen von Wäsche, mit zumindest einem ersten Ventilelement (1), wobei das erste Ventilelement (1) einen Ventilraum (9) und einen in dem Ventilraum (9) angeordneten Ventilschließkörper (5) aufweist, wobei dem Ventilraum (9) ein Eingang (6), ein erster Ausgang (7) und ein zweiter Ausgang (8) zugeordnet sind und wobei der Ventilschließkörper (5) von einer magnetischen Betätigungseinrichtung (15) betätigbar ist,
**dadurch gekennzeichnet,**
**dass** das erste Ventilelement (1) so angeordnet ist, dass der Ventilschließkörper (5) in einer Betriebslage aufgrund der Schwerkraft (16) an dem ersten Ausgang (7) angeordnet ist, und dass die magnetische Betätigungseinrichtung (15) zum Betätigen des Ventilschließkörpers (5) entgegen der Schwerkraft (16) von dem ersten Ausgang (7) zu dem zweiten Ausgang (8) dient, wobei zumindest ein zweites Ventilelement (30) vorgesehen ist, wobei das zweite Ventilelement (30) einen Ventilraum (35) und einen in dem Ventilraum (35) angeordneten Ventilschließkörper (36) aufweist, wobei dem Ventilraum (35) des zweiten Ventilelements (30) ein Eingang (37), ein erster Ausgang (38) und ein zweiter Ausgang (39) zugeordnet sind und wobei der Ventilschließkörper (36) des zweiten Ventilelements (30) von einer weiteren magnetischen Betätigungseinrichtung (40) betätigbar ist, wobei das zweite Ventilelement (30) so angeordnet ist, dass der Ventilschließkörper (36) des weiteren Ventilelements (30) in der Betriebslage aufgrund der Schwerkraft (16) an dem ersten Ausgang (38) des zweiten Ventilelements (30) angeordnet ist, und wobei die weitere magnetische Betätigungseinrichtung (40) zum Betätigen des Ventilschließkörpers (36) des zweiten Ventilelements (30) entgegen der Schwerkraft (16) von dem ersten Ausgang (38) des zweiten Ventilelements (30) zu dem zweiten Ausgang (39) des zweiten Ventilelements (30) dient, wobei das erste Ventilelement (1) und das zweite Ventilelement (30) hintereinandergeschaltet sind, wobei einer der Ausgänge (7, 8) des ersten Ventilelements (1) zu dem Eingang (37) des zweiten Ventilelements (30) führt.

2. Wasserführendes Haushaltsgerät nach Anspruch 1, **dadurch gekennzeichnet, dass** der Ventilschließkörper (5) zwischen dem ersten Ausgang (7) und dem zweiten Ausgang (8) in dem Ventilraum (9) geführt ist, dass der Eingang (6) zwischen dem ersten Ausgang (7) und dem zweiten Ausgang (8) in den Ventilraum (9) mündet, dass der Ventilschließkörper (5) in der Betriebslage aufgrund der Schwerkraft (16) zwischen dem ersten Ausgang (7) und dem Eingang (6) angeordnet ist und dass der von der magnetischen Betätigungseinrichtung (15) betätigte Ventilschließkörper (5) zwischen dem Eingang (6) und dem zweiten Ausgang (8) angeordnet ist.

3. Wasserführendes Haushaltsgerät nach Anspruch 1 oder 2, **dadurch gekennzeichnet, dass** eine Steuerung (26) und ein Sperrventil (25) vorgesehen sind, dass das Sperrventil (25) eine Zufuhr eines durch das erste Ventilelement (1) führbaren Wasserstroms steuert und dass die Steuerung (26) eine mögliche Ansteuerung der magnetischen Betätigungseinrichtung (15) vor einer Ansteuerung des Sperrventils (25), bei der das Sperrventil (25) geöffnet wird, ausführt.

4. Wasserführendes Haushaltsgerät nach einem der Ansprüche 1 bis 3, **dadurch gekennzeichnet, dass** der Ventilschließkörper (5) zumindest teilweise aus einem ferromagnetischen Werkstoff gebildet ist.

5. Wasserführendes Haushaltsgerät nach einem der Ansprüche 1 bis 4, **dadurch gekennzeichnet, dass** der Ventilschließkörper (5) eine auf zumindest einem Kunststoff basierende Schale (18) aufweist.

6. Wasserführendes Haushaltsgerät nach einem der Ansprüche 1 bis 5, **dadurch gekennzeichnet, dass** der Ventilschließkörper (5) als hohlkugelförmiger Ventilschließkörper (5) ausgestaltet ist.

7. Wasserführendes Haushaltsgerät nach einem der vorherigen Ansprüche, **dadurch gekennzeichnet, dass** zumindest ein drittes Ventilelement (51) vorgesehen ist, dass das dritte Ventilelement (51) einen Ventilraum (52) und einen in dem Ventilraum (52) angeordneten Ventilschließkörper (53) aufweist, dass dem Ventilraum (52) des weiteren Ventilelements (51) ein Eingang (56), ein erster Ausgang (57) und ein zweiter Ausgang (58) zugeordnet sind, dass der Eingang (6) des ersten Ventilelements (1) durch den ersten Ausgang (57) des dritten Ventilelements (51) gebildet ist, dass der Eingang (37) des zweiten Ventilelements (30) durch den zweiten Ausgang (58) des dritten Ventilelements (51) gebildet ist, dass der Ventilschließkörper (53) des dritten Ventilelements (51) entweder von der magnetischen Betätigungseinrichtung (15) oder von der weiteren magnetischen Betätigungseinrichtung (40) betätigbar ist, wobei die magnetische Betätigungseinrichtung (15) und die weitere magnetische Betätigungseinrichtung (40) so angeordnet sind, dass bei aktivierter magnetischer Betätigungseinrichtung (15) und deaktivierter weiterer magnetischer Betätigungseinrichtung (40) der Ventilschließkörper (53) des dritten Ventilelements (51) an den ersten Ausgang (57) des dritten Ventilelements (51) verstellbar ist und bei deaktivierter magnetischer Betätigungseinrichtung (15) und aktivierter weiterer magnetischer Betätigungseinrichtung (40) der Ventilschließkörper (53) des dritten Ventilelements (51) an den zweiten Ausgang (58) des dritten Ventilelements (51) verstellbar ist.

8. Wasserführendes Haushaltsgerät nach einem der vorherigen Ansprüche, **dadurch gekennzeichnet, dass** das erste Ventilelement (1), das zweite Ventilelement (30) und das dritte Ventilelement (51) eine Ventileinheit (50) bilden und dass die Ausgänge (7, 8) des ersten Ventilelements (1) und die Ausgänge (38, 39) des zweiten Ventilelements (30) die Ausgänge (7, 8, 38, 39) der Ventileinheit (50) bilden.

## Claims

1. Water-conducting household appliance (2), in particular laundry treatment device for washing and/or drying laundry, having at least one first valve element (1), wherein the first valve element (1) has a valve chamber (9) and a valve closing element (5) arranged in the valve chamber (9), wherein an input (6), a first output (7) and a second output (8) are assigned to the valve chamber (9) and wherein the valve closing element (5) can be actuated by a magnetic actuation facility (15),
**characterised in that,**
the first valve element (1) is arranged such that in an operating position the valve closing element (5) is arranged at the first output (7) on account of gravity and that the magnetic actuation facility (15) serves to actuate the valve closing element (5) against gravity (16) from the first output (7) to the second output (8), wherein at least one second valve element (30) is provided, wherein the second valve element (30) has a valve chamber (35) and a valve closing element (36) arranged in the valve chamber (35), wherein an input (37), a first output (38) and a second output (39) are assigned to the valve chamber (35) of the second valve element (30) and wherein the valve closing element (36) of the second valve element (30) can be actuated by a further magnetic actuation facility (40), wherein the second valve element (30) is arranged such that in the operating position the valve closing element (36) of the further valve element (30) is arranged at the first output (38) of the second valve element (30) on account of gravity (16) and wherein the further magnetic actuation facility (40) serves to actuate the valve closing element (36) of the second valve element (30) against gravity from the first output (38) of the second valve element (30) to the second output (39) of the second valve element (30), wherein the first valve element (1) and the second valve element (30) are arranged one behind the other, wherein one of the outputs (7, 8) of the first valve element (1) leads to the input (37) of the second valve element (30).

2. Water-conducting housing appliance according to claim 1, **characterised in that** the valve closing element (5) is guided between the first output (7) and the second output (8) in the valve chamber (9), that the input (6) between the first output (7) and the second output (8) opens into the valve chamber (9), that in the operating position the valve closing element (5) is arranged between the first output (7) and the input (6) on account of gravity (16) and that the valve closing element (5) actuated by the magnetic actuation facility (15) is arranged between the input (6) and the second output (8).

3. Water-conducting household appliance according to claim 1 or 2, **characterised in that** a controller (26) and a blocking valve (25) are provided, that the blocking valve (25) controls a supply of water flow which can be fed through the first valve element (1) and that the controller (26) executes a possible actuation of the magnetic actuation facility (15) prior to actuation of the blocking valve (25), in which the blocking valve (25) is open.

4. Water-conducting household appliance according to one of claims 1 to 3, **characterised in that** the valve closing element (5) is formed at least partially from a ferromagnetic material.

5. Water-conducting household appliance according to one of claims 1 to 4, **characterised in that** the valve closing element (5) has a tray (18) based on at least one plastic.

6. Water-conducting household appliance according to one of claims 1 to 5, **characterised in that** the valve closing element (5) is embodied as a hollow ball-shaped valve closing element (5).

7. Water-conducting household appliance according to one of the preceding claims, **characterised in that** at least one third valve element (51) is provided, that the third valve element (51) has a valve chamber (52) and a valve closing element (53) arranged in the valve chamber (52), that an input (56), a first output (57) and a second output (58) are assigned to the valve chamber (52) of the further valve element (51), that the input (6) of the first valve element (1) is formed by the first output (57) of the third valve element (51), that the input (37) of the second valve element (30) is formed by the second output (58) of the third valve element (51), that the valve closing element (53) of the third valve element (51) can either be actuated by the magnetic actuation facility (15) or by the further magnetic actuation facility (40), wherein the magnetic actuation facility (15) and the further magnetic actuation facility (40) are arranged such that with an activated magnetic actuation facility (15) and deactivated further magnetic actuation facility (40), the valve closing element (53) of the third valve element (51) can be adjusted at the first output (57) of the third valve element (51) and with a deactivated magnetic actuation facility (15) and activated further magnetic actuation facility (40), the valve closing element (53) of the third valve element (51) can be adjusted at the second output (58) of the third valve element (51).

8. Water-conducting household appliance according to one of the preceding claims, **characterised in that** the first valve element (1), the second valve element (30) and the third valve element (51) form a valve unit (50) and that the outputs (7, 9) of the first valve element (1) and the outputs (38, 39) of the second valve element (30) form the outputs (7, 8, 38, 39) of the valve unit (50).

## Revendications

1. Appareil ménager à circulation d'eau (2), en particulier appareil lave-linge destiné au lavage et/ou au séchage du linge, avec au moins un premier élément formant vanne (1), dans lequel le premier élément formant vanne (1) présente une chambre de vanne (9) et un clapet de vanne (5) agencé dans la chambre de vanne (9), dans lequel une entrée (6), une première sortie (7) et une deuxième sortie (8) sont associées à la chambre de vanne (9) et dans lequel le clapet de vanne (5) peut être actionné par un dispositif d'actionnement magnétique (15),
**caractérisé en ce que**,
le premier élément formant vanne (1) est agencé de telle manière que le clapet de vanne (5) est agencé au niveau de la première sortie (7) dans une position de fonctionnement par rapport à la force de gravité (16), et le dispositif d'actionnement magnétique (15) sert à actionner le clapet de vanne (5) à l'encontre de la force de gravité (16) de la première sortie (7) vers la deuxième sortie (8), dans lequel au moins un deuxième élément formant vanne (30) est prévu, dans lequel le deuxième élément formant vanne (30) présente une chambre de vanne (35) et un clapet de vanne (36) agencé dans la chambre de vanne (35), dans lequel une entrée (37), une première sortie (38) et une deuxième sortie (39) sont associées à la chambre de vanne (35) du deuxième élément formant vanne (30) et dans lequel le clapet de vanne (36) du deuxième élément formant vanne (30) peut être actionné par un autre dispositif d'actionnement magnétique (40), dans lequel le deuxième élément formant vanne (30) est agencé de telle manière que le clapet de vanne (36) de l'autre élément formant vanne (30) est agencé au niveau de la première sortie (38) du deuxième élément formant vanne (30) dans la position de fonctionnement par rapport à la force de gravité (16), et dans lequel l'autre dispositif d'actionnement magnétique (40) sert à actionner le clapet de vanne (36) du deuxième élément formant vanne (30) à l'encontre de la force de gravité (16) de la première sortie (38) du deuxième élément formant vanne (30) vers la deuxième sortie (39) du deuxième élément formant vanne (30), dans lequel le premier élément formant vanne (1) et le deuxième élément formant vanne (30) sont placés l'un derrière l'autre, dans lequel une des sorties (7, 8) du premier élément formant vanne (1) amène à l'entrée (37) du deuxième élément formant vanne (30).

2. Appareil ménager à circulation d'eau selon la revendication 1, **caractérisé en ce que** le clapet de vanne (5) est guidé dans la chambre de vanne (9) entre la première sortie (7) et la deuxième sortie (8), l'entrée (6) débouche dans la chambre de vanne (9) entre la première sortie (7) et la deuxième sortie (8), le clapet de vanne (5) est agencé dans la position de fonctionnement par rapport à la force de gravité (16) entre la première sortie (7) et l'entrée (6), et le clapet de vanne (5) actionné par le dispositif d'actionnement magnétique (15) est agencé entre l'entrée (6) et la deuxième sortie (8).

3. Appareil ménager à circulation d'eau selon la revendication 1 ou 2, **caractérisé en ce qu'**une commande (26) et une vanne de blocage (25) sont prévues, la vanne de blocage (25) commande une admission d'un courant d'eau pouvant être guidé à travers le premier élément formant vanne (1) et la commande (26) réalise une activation éventuelle du dispositif d'actionnement magnétique (15) avant une activation de la vanne de blocage (25), à l'occasion de laquelle la vanne de blocage (25) est ouverte.

4. Appareil ménager à circulation d'eau selon l'une quelconque des revendications 1 à 3, **caractérisé en ce que** le clapet de vanne (5) est formé au moins partiellement à partir d'un matériau ferromagnétique.

5. Appareil ménager à circulation d'eau selon l'une quelconque des revendications 1 à 4, **caractérisé en ce que** le clapet de vanne (5) présente une coque (18) à base d'au moins une matière plastique.

6. Appareil ménager à circulation d'eau selon l'une quelconque des revendications 1 à 5, **caractérisé en ce que** le clapet de vanne (5) est réalisé en tant que clapet de vanne (5) en forme de boule creuse.

7. Appareil ménager à circulation d'eau selon l'une quelconque des revendications précédentes, **caractérisé en ce qu'**au moins un troisième élément formant vanne (51) est prévu, le troisième élément formant vanne (51) présente une chambre de vanne (52) et un clapet de vanne (53) agencé dans la chambre de vanne (52), une entrée (56), une première sortie (57) et une deuxième sortie (58) sont associées à la chambre de vanne (52) de l'autre élément formant vanne (51), l'entrée (6) du premier élément formant vanne (1) est formée à travers la première sortie (57) du troisième élément formant vanne (51), l'entrée (37) du deuxième élément formant vanne (30) est formée à travers la deuxième sortie (58) du troisième élément formant vanne (51), le clapet de vanne (53) du troisième élément formant vanne (51) peut être actionné par le dispositif d'actionnement magnétique (15) ou par l'autre dispositif d'actionnement magnétique (40), le dispositif d'actionnement magnétique (15) et l'autre dispositif d'actionnement magnétique (40) étant agencés de telle manière que, lorsque le dispositif d'actionnement magnétique (15) est activé et l'autre dispositif d'actionnement magnétique (40) est désactivé, le clapet de vanne (53) du troisième élément formant vanne (51) peut être ajusté sur la première sortie (57) du troisième élément formant vanne (51) et, lorsque le dispositif d'actionnement magnétique (15) est désactivé et l'autre dispositif d'actionnement magnétique (40) est activé, le clapet de vanne (53) du troisième élément formant vanne (51) peut être ajusté sur la deuxième sortie (58) du troisième élément formant vanne (51).

8. Appareil ménager à circulation d'eau selon l'une quelconque des revendications précédentes, **caractérisé en ce que** le premier élément formant vanne (1), le deuxième élément formant vanne (30) et le troisième élément formant vanne (51) forment une unité de vanne (50), et les sorties (7, 8) du premier élément formant vanne (1) et les sorties (38, 39) du deuxième élément formant vanne (30) forment les sorties (7, 8, 38, 39) de l'unité de vanne (50).
